# EUROPÄISCHE PATENTANMELDUNG

(11) **EP 1 550 703 A1**
(43) Veröffentlichungstag der Anmeldung: **06.07.2005**
(21) Anmeldenummer: 04000054.9
(22) Anmeldetag: 05.01.2004
(51) Int. Cl.: C09J 7/00, B60J 11/00, B29C 63/02, B29B 13/02

(54) **Schutzfolie aus Schmelzklebstoff sowie Verfahren und Vorrichtung zum Applizieren derselben**

(71) Anmelder: Sika Technology AG, 6340 Baar (CH)
(72) Erfinder: Linnenbrink, Martin, 21641 Apensen (DE)

(57) **Zusammenfassung**

Es wird eine einlagig, trägerfreie Schutzfolie (12) aus einem Schmelzklebstoff (14, 14') vorgestellt, die einfach und schnell appliziert werden kann. Weiter wir das Verfahren zum applizieren derselben und eine entsprechende Vorrichtung (16, 16') vorgestellt.

## Beschreibung

### Technisches Gebiet

Die Erfindung bezieht sich auf eine Schutzfolie, gemäss den Merkmalen des Oberbegriffes des Patentanspruches 1, sowie auf eine Methode und eine Vorrichtung zum Applizieren einer solchen Schutzfolie gemäss den Merkmalen des Oberbegriffes der Patentansprüche 7 und 14.

### Stand der Technik

Für Transport, Verteilung und Lagerung von Gütern ist es in der Regel erforderlich diese Güter zu schützen. Das fängt bei den kleinen Verbrauchsmaterialien wie Zahnbürsten und Zeitungen an, geht über Dämmstoffe für Fassaden bis hin zu Automobilen.

Die Verpackung mit Folien ist hierbei seit geraumer Zeit üblich. Wobei die Güter nicht nur in die Folien eingewickelt oder mit diesen überdeckt werden. Durch den Einsatz von unter Wärmeeinfluss schrumpfenden Folien ist es möglich, die Folie auf den zu verpackenden Körper aufzuschrumpfen.

Ein Beispiel für eine solche Schrumpffolienverpackung ist in FR 2 576 824 für Papiersäcke gezeigt. Vor ihrem Transport werden die Papiersäcke zu grossen Stapeln zusammengelegt und anschliessend derart durch einen Folienvorhang geschoben, dass die Folie den Stapel unten, oben an der Vorder- und der Rückseite umgibt. Die Folienbahn ist dabei überbreit und steht auf beiden Seiten des Stapels weit über. Ist der Stapel ganz durch den Folienvorhang hindurch geschoben, so wird hinter dem Stapel die Folie zu einem den Stapel umgebenden Folienschlauch verschweisst. Anschliessend wird der Stapel durch eine Heizbox gefördert, die Folie schrumpft passgenau auf den Stapel auf und die überstehenden Seiten verschweissen, so dass eine den Stapel abdichtende Verpackung entsteht.

Als "Verpackung" für Automobile für Ihren Transport von der Produktionsstätte zum Händler und schliesslich zum Kunden wird heute immer noch mehrheitlich die Konservierung mit Paraffinwachsen eingesetzt. Die Konservierung mit Paraffinwachsen hat den Nachteil, dass beim Auftragen des Paraffinwachses mittels Sprühvorhang unterschiedliche Schichtdicken entstehen. Weiterhin kann ohne Abdeckungen nicht verhindert werden, dass beim Sprühvorgang auch ungewünschte Zonen kontaminiert werden. Dies ist sehr nachteilig. Zudem ist die Entfernung des Wachses zeitaufwendig und wegen der schlechten Umweltverträglichkeit sehr teuer.

Das Aufschrumpfen von vorkonfektionierten Schrumpffolien konnte sich für Automobile bisher nicht durchsetzen, da deren Anlegen sehr aufwendig ist. Solche Schrumpffolien sind aus einer thermoplastischen Folie und einem Vlies aufgebaut. Damit die maskierten Wagen auf dem Gelände und bei der Auslieferung bewegt werden können, müssen die Hauben mit Reissverschlüssen passend für das entsprechende Modell gefertigt werden, was teuer ist. Aber auch das Öffnen und Schliessen der Reissverschlüsse muss mit Sorgfalt erfolgen und kostet Zeit.

Selbstklebende Schutzfolien, wie sie in der letzten Zeit für die Applikation auf Automobile oder Fahrzeugteile vorgeschlagen wurden, sind wenigstens zweilagig aufgebaut, wie dies in DE 100 29 489 A1, DE 100 07 060 oder auch in DE 197 42 805 beschrieben ist. Das heisst, die Herstellung der selbstklebenden Schutzfolie ist mit einigem Aufwand verbunden, da die einzelnen Schichten in ihrer Zusammensetzung separat hergestellt und dann zu der genannten Folie vereint werden müssen. Das heisst, zunächst wird der Träger hergestellt, auf den dann in der Regel ein Haftvermittler appliziert wird und anschliessend wird die selbstklebende Klebemasse aufgebracht. Da die Schutzfolien in der Regel in vorgefertigten Bahnen vorliegen, ist auch hier die Applikation nicht ganz unproblematisch, zumal wenn die Bahnbreite nicht optimal auf die Modellbreite des Automobils abgestimmt ist. Sind zudem als Lichtschutzmittel gegen die UV-Strahlung Titandioxid oder andere Pigmente eingesetzt, so müssen die Scheiben von Schutzfolie freigehalten werden, damit die Fahrzeuge noch gefahrlos bewegt werden können.

Eine weitere Art der selbstklebenden Schutzfolien basiert auf einer Dispersion und lässt sich aufsprühen. Das Aufsprühen kann dabei über einen Sprühvorhang erfolgen, ähnlich wie dies beispielsweise in EP 1 252 937 A1 beschrieben ist, oder aber sehr gezielt mittels robotergesteuerten Sprühdüsen. Zum Aushärten muss diese Art Folie kurzzeitig auf relativ hohe Temperaturen erhitzt werden, d.h. es können nur Gegenstände damit verpackt werden, die diese Temperaturen ohne Schaden ertragen können. Obgleich beim Aufsprühen mittels Robotern eine recht hohe Sprühgenauigkeit erreicht wird, so ist es bei dieser Art Selbstklebefolie dennoch nötig, Spalten bei Fenstern und Türen entweder abzudichten oder genügend Abstand davon zu halten. Dies ist deshalb nötig, weil die flüssig aufgesprühte Dispersion in Spalten, wie sie beispielsweise bei den Türen oder der Motorhaube vorhanden sind, eindringt. Die derart hergestellte selbstklebende Schutzfolie nach dem Abtrocknen und der Filmbildung, gegebenenfalls Aushärtung, wieder aus den Spalten zu entfernen, ist jedoch sehr aufwendig bis unmöglich, insbesondere weil sich in diesen Spalten kein zusammenhängender Film bilden kann. Da des weiteren auch bei diesen Schutzfolien mit Titandioxid und anderen Pigmenten für den UV-Schutz gearbeitet wird, ist es auch hier nötig, die Scheiben freizuhalten. Bei Sprührobotern kann dies mit einer entsprechenden, an jedes Modell individuell angepassten Programmierung erreicht werden. Bei Verwendung eines Sprühvorhanges müssen die Fenster vorher abgeklebt werden, was mit einem entsprechenden Arbeitsaufwand verbunden ist. Weiterhin wird durch den sogenannten "Overspray" viel Material unnötig verbraucht.

Da die Eigenschaften der aufgesprühten Selbstklebefolie extrem von ihrer Zusammensetzung abhängen, ist es kaum möglich, selbst bei Dispersionen auf Wasserbasis, die Dispersion vor Ort herzustellen, d.h. mit Wasser zu mischen. Dies bedeutet aber, dass das vom Hersteller zum Anwendungsort zu transportierende Gut, nämlich die Dispersion, zu einem Grossteil aus Wasser besteht, was sich sehr negativ auf die Ökobilanz auswirkt. Ebenfalls nachteilig auf die Ökobilanz wirkt sich der zwingend vorgeschriebene Trocknungschritt aus, weil hier wiederum viel Energie verbraucht wird. Weiterhin besteht der Nachteil, dass Dispersionen grundsätzlich mit Problemen der Lagerstabilität aufweisen. Insbesondere ist es bekannt, dass Temperaturen unter 0°C äusserst problematisch für Dispersionen sind.

### Darstellung der Erfindung

Aufgabe der vorliegenden Erfindung ist es daher, eine Schutzfolie zur Verfügung zu stellen, die einfach und kostengünstig zu applizieren ist, insbesondere auch auf Automobile und Fahrzeugteile, sowie eine Methode zu ihrer Applikation und eine geeignete Vorrichtung zur Applikation.

Diese Aufgabe löst eine Schutzfolie gemäss den Merkmalen des Patentanspruches 1, ein Verfahren gemäss den Merkmalen des Patentanspruches 7 und eine Vorrichtung gemäss den Merkmalen des Patentanspruches 14.

Eine Schutzfolie, die einlagig, trägerfrei aus einem Schmelzklebstoff hergestellt ist, lässt sich quasi im Zeitpunkt ihrer Herstellung applizieren, was schnell und kostengünstig ist. Da die Schutzfolie Spalten überdeckt, statt wie eine Dispersion in sie einzudringen, ist es beim Applizieren der Folie nicht nötig, Spalten abzukleben oder Abstand von ihnen zu halten.

### Wege zur Ausführung der Erfindung

Die Erfindung betrifft eine Schutzfolie aus Kunststoff, welche einlagig, trägerfrei und aus einem Schmelzklebstoff hergestellt ist.

Unter "trägerfrei" wird in der gesamten vorliegenden Schrift verstanden, dass keinerlei zusätzliche Trägermaterialien, wie beispielsweise Vliese oder Silikonpapier, in der Schutzfolie vorhanden sind.

Ist die Schutzfolie selbstklebend, so ist das Applizieren noch einfacher und schneller möglich und erweitert die Einsatzmöglichkeiten. Für viele Verwendungszwecke wird eine transparente Schutzfolie gewünscht, was mit der Wahl des geeigneten Schmelzklebstoffes auch erreicht werden kann.

Als geeignete Basisstoffe für die erfindungsgemässen selbstklebenden Schutzfolien haben sich thermoplastische Schmelzklebstoffe erwiesen von Stoffen ausgewählt aus der folgenden Gruppe umfassend thermoplastische Polyurethane, thermoplastische Polyamide (PA), thermoplastische Co-Polyamide, thermoplastische Polyester (PES), thermoplastische Co-Polyester, thermoplastische Ethylen-Vinylacetat-Copolymere (EVA) oder auch thermoplastische Polyolefine. Hierunter insbesondere ataktische Poly-α-olefine(APAO), Polypropylen (PP) oder Polyethylen (PE). Denkbar sind auch Schmelzklebstoffe auf Basis einer Kombination aus den oben genannten thermoplastischen Stoffen.

Reaktiven Schmelzklebstoffe, wie beispielsweise reaktives PUR oder reaktive Polyolefine, sind für die selbstklebende Schutzfolie ebenfalls geeignet. Bei diesen Stoffen oder Kombination aus diesen Stoffen muss man allerdings beachten, dass Umgebungsparameter, wie Feuchtigkeit und andere, den Aushärtungsprozess beeinflussen. Applikationen unter konstanten oder kontrollierbaren Bedingungen sind daher hier zu bevorzugen.

Bei Wahl des geeigneten Schmelzklebstoffes für die erfindungsgemässe Schutzfolie lässt sich diese, wie bei den dispersionsbasierten oder auf einem Träger applizierten Schutzfolien, ebenfalls wieder rückstandslos von der Oberfläche, auf die sie appliziert wurde, entfernen. Dies insbesondere auch von Lackoberflächen und Automobilen und auch nach längerer Bewitterung. Jedoch ist eine gewisses Ausmass an Haftung gefordert, so dass beispielsweise die Schutzfolie auch bei Wind auf der Karosserieoberfläche haftet bleibt.

Als bevorzugt gezeigt haben sich Schmelzklebstoffe umfassend oder bestehend aus Polyester. Besonders geeignete Polyester sind lineare, teilkristalline, gesättigte Copolyester aus Dicarbonsäuren und Diolen aufgebaut. Als Diole eignen sich insbesondere kurzkettige Alkylendiole, insbesondere Butandiol und Hexandiol. Als Dicarbonsäuren eigenen sich vor allem Glutarsäure, Adipinsäure, Dodecandicarbonsäure, Phtalsäure sowie Isophtalsäure. Besonders geeignet haben sich Polyester, die aus Gemischen von Diolen und Dicarbonsäuren sind oder Gemische von Polyestern. Die Polyester weisen geeigneterweise ein Molekulargewicht (MG) zwischen 10'000 und 30'000 g/mol, inbesondere zwischen 15'000 und 20'000 g/mol auf.

Die geeigneten Schmelzklebstoffe sollen bei Temperaturen unter 60°C, insbesondere unter 70°C bevorzugt unter 80°C nicht klebrig sein. Klebrigkeit einer solchen Schutzfolie würde zu ästhetisch nachteiligen Schutzfolien führen, da beispielsweise Staub auf der Folie haften würde.

Weiterhin sollte die Folie sowohl frisch nach Applikation als auch zu einem späteren Zeitpunkt noch rückstandsfrei entfernt werden können und insbesondere die Oberfläche des zu schützenden Gutes, insbesondere einen Automobillack, nicht schädigen. Diese Eigenschaft darf auch nicht durch Bewitterung und Alterung der Schutzfolie wesentlich beeinflusst werden.

Mit erfindungsgemässen selbstklebenden Schutzfolien die eine Dicke im Bereich von 2 Mikrometer bis 3 Millimeter, insbesondere von 50 Mikrometer bis 500 Mikrometer aufweisen, lassen sich die verschiedensten Gegenstände problemlos verpacken. Die Schutzfolie reisst nicht und passt sich den Aussenkonturen des zu schützenden Gutes sehr schön an. Foliendicken von 200 Mikrometer bis 300 Mikrometer haben sich dabei als besonders gut geeignet herausgestellt.

Sind die erfindungsgemässen Schutzfolien selbstklebend und transparent, so können Automobile damit überzogen werden, ohne dass die Fenster abgeklebt oder ausgespart werden müssten oder die Schutzfolie nach dem Applizieren von diesen entfernt werden müsste. Die Fahrzeuge sind ohne weiteres auf dem Gelände beim Hersteller, beim Transport und beim Händler bis hin zum Kunden mit der Folie auf den Fenstern gefahrlos bewegbar.

Bei dem erfindungsgemässen Verfahren zum Applizieren einer Schutzfolie, wird ein Schmelzklebstoff in einem Hauptschmelzbereich auf Applikationstemperatur erhitzt, wobei die Applikationstemperatur so geregelt wird, dass sich beim Abfliessen des Schmelzklebstoffes aus dem Hauptschmelzbereich eine Folie gewünschter Breite ausbildet. Führt man nun unter dieser aus dem Hauptschmelzbereich abfliessenden Folie einen Gegenstand hindurch, der mit der Schutzfolie geschützt werden soll, so wird dieser zu schützende Gegenstand in gewünschter Weise mit der Schutzfolie überzogen. Dieses Verfahren ist äusserst schnell und effizient, da die Schutzfolie nicht vorfabriziert werden muss und bezüglich Spalten keine Vorkehrungen getroffen werden müssen, da die Folie solche Spalten überdeckt und keine Gefahr besteht, dass die Spalten sich mit Klebstoff füllen.

Eine optimale Verpackung des zu schützenden Gutes erhält man, wenn bei dem Verfahren die Folienbreite beim Austritt aus dem Hauptschmelzbereich so eingestellt wird, dass sie etwa der Breite des mit der Folie zu schützenden Gutes addiert mit der doppelten Höhe des Gutes entspricht. Mit einer solchen Folienbreite ist gewährleistet, dass die Folie den Gegenstand nicht nur vorne, oben und auf der Rückseite umschliesst, sondern den Gegenstand auch seitlich umhüllt. Bereiche, die gegebenenfalls von der Folie nicht abgedeckt werden sollen, wie beispielsweise Räder, Tankbereich oder unter Umständen Scheiben oder Scheinwerfer, können problemlos ausgeschnitten werden. Weiterhin ist es problemlos die Folie, welche über Spalten appliziert wurde, bei Bedarf einzuschneiden, ohne dass der Lack beschädigt wird. Dies ist insbesondere bei den Türen, sowie Klappen jeglicher Art, insbesondere Tankdeckel, Motorhaube sinnvoll, die nach dem Verpacken geöffnet werden müssen, zum Beispiel um ins Wageninnere zu gelangen oder das Fahrzeug zu betanken. Der Schutz wird dadurch nicht beeinträchtigt, da die bewegten Teile ebenfalls mit einer Schutzfolie geschützt sind.

Um der Oxidation des Schmelzklebstoffes vorzubeugen, ist es sinnvoll den Schmelzklebstoff in einem Vorschmelzbereich aufzuschmelzen, ehe er im Hauptschmelzbereich auf die Applikationstemperatur erhitzt wird.

Abhängig vom gewählten Schmelzklebstoff und der Temperatur, sowie der Wärmeleitfähigkeit des zu schützenden Gutes, wird die Applikationstemperatur des Schmelzklebstoffes gewählt. Typischerweise wird der Schmelzklebstoff auf eine Applikationstemperatur im Bereich von 80° bis 250°C erhitzt. Als besonders geeignet haben sich Temperaturen zwischen 130°C und 210°C, insbesondere zwischen 160°C und 200°C erwiesen.

Um eine gute Benetzung der zu beklebenden Oberfläche mit der selbstklebenden Schutzfolie zu erreichen, werden die Temperatur der Oberfläche des Gutes und die Applikationstemperatur des Schmelzklebstoffes so aufeinander abgestimmt, dass die Temperaturdifferenz zwischen der Oberfläche und der Applikationstemperatur vorzugsweise wenigstens 50°C beträgt. Die Oberflächentemperatur des zu schützenden Gutes sollte hierbei idealerweise nicht mehr als 80 °C und nicht weniger als 0°C, insbesondere zwischen 20°C und 40°C, betragen. Wenn beispielsweise das zu schützende Gut im Freien bei einer Temperatur unter 0°C gelagert wird und sofort in einer wärmeren Halle mit Umgebungsfeuchte mit einer Folie beschichtet werden würde, bestünde die Gefahr, dass sich auf der Oberfläche ein Taufilm bildet, welcher eine Haftung des Schutzfilms auf der Oberfläche verhindern würde. Dies ist jedoch in den meisten Fällen unerwünscht.

Soll ein Gegenstand rundum und nicht nur vorne, oben, auf den Seiten und hinten mit der Schutzfolie geschützt werden, so lässt sich das Verfahren mit einem Tragelement kombinieren, welches quer zur Folie in eine erste Richtung und eine entgegengesetzte zweite Richtung bewegt werden kann. Das Tragelement ist dann sinnvoller Weise abstossend beschichtet, beispielsweise aus Teflon oder mit Teflon beschichtet, so dass die Folie nicht darauf haftet. Während das Tragelement in einer ersten Richtung quer zu der aus dem Hauptschmelzbereich abfliessenden Folie bewegt wird, wird die Folie auf dem Tragelement als Folienfilm abgelegt. Das zu schützende Gut wird anschliessend auf den Folienfilm gelegt, der auf dem Tragelement ruht, und das Tragelement wird in entgegengesetzter zweiter Richtung quer zur Folie bewegt, so dass das Gut von der Folie überzogen wird. Damit ist das Gut unten, vorne, oben und hinten mit der Folie umschlossen. Wird die Folienbreite so gewählt wie oben beschrieben, fällt die Folie zudem mit ihren überstehenden Rändern über die Seiten des Gegenstandes herab, so dass der Gegenstand ganz umhüllt ist.

Egal ob nun der Gegenstand ganz oder mit Ausnahme der Unterseite mit der Schutzfolie überzogen wird, wird die Folie am Ende des Prozessschrittes "Überziehen" auf gewünschter Länge abgeschnitten und der nächste Gegenstand kann mit Schutzfolie überzogen werden.

Für eine besonders gute Haftung auf der Oberfläche wird der zu schützende Gegenstand anschliessend an das Überziehen mit Heissluft behandelt. Dabei passt sich die Schutzfolie aus Schmelzklebstoff der äusseren Kontur des Gegenstandes an, ohne jedoch in Vertiefungen, Spalten, Löcher und dergleichen einzudringen, vielmehr werden solche Diskontinuitäten der Oberfläche von der Schutzfolie überspannt. Geschwungene Oberflächen konkaver und konvexer Natur werden dagegen passgenau von der Folie überzogen.

Um eine solche Schutzfolie aus Schmelzklebstoff applizieren zu können, ist eine Vorrichtung vorgesehen, die in bekannter Weise einen beheizbaren Behälter als Bestandteil des Hauptschmelzbereichs aufweist, in dem der Schmelzklebstoff auf seine Applikationstemperatur erhitzt wird. Weiter ist eine zum Hauptschmelzbereich gehörende Applikationseinheit vorgesehen, über die der verflüssigte Schmelzklebstoff so abfliesst, dass er eine zusammenhängende Folie vorbestimmter Breite und vorbestimmter Dicke bildet.

In einer bevorzugten Ausführungsform ist die Applikationseinheit als Breitschlitzdüse ausgebildet. Denkbar sind aber auch mehrere kleine Düsen nebeneinander, wobei der Abstand der Düsen zueinander so bemessen sein muss, dass es beim Abfliessen des Schmelzklebstoffes zur Ausbildung einer Folie kommt. Das Abfliessen der Folie kann prinzipiell über die Schwerkraft, d.h. das Eigengewicht des Schmelzklebstoffes gesteuert werden, bevorzugt kann aber auch mit Hilfe einer Pumpe unter Druck erfolgen. Insbesondere bevorzugt wird hierbei eine dem Fachmann für die Verarbeitung von Schmelzklebstoff bekannt Anordnung verwendet, nämlich die Verwendung einer Fasspumpe mit beheizbarer Folgeplatte oder einem Extruder.

In einer besonders bevorzugten Ausführungsform ist die Applikationseinheit mit einer Breitschlitzdüse versehen, deren Schlitztiefe und Schlitzbreite einstellbar sind, wobei über die Schlitztiefe die Foliendicke bestimmt wird und über die Schlitzbreite die Breite der resultierenden Folie. Besonders günstig ist es, wenn die Schlitzbreite so einstellbar ist, dass die Breite der resultierenden Folie etwa der Breite eines mit der Folie zu schützenden Gutes addiert mit der doppelten Höhe des Gutes entspricht. Ist die Schlitztiefe nicht einstellbar, so kann auch mittels druckgesteuerter Durchflussmenge des flüssigen Schmelzklebstoffes durch die Breitschlitzdüse auf die Foliendicke Einfluss genommen werden. Bei einer Applikationseinheit mit vielen kleinen Düsen, kann die resultierende Folienbreite über Zu- bzw. Wegschalten der seitlich äussersten Düsen erfolgen. Während die Dicke der Folie über eine Veränderung der Grösse der Düsenöffnungen oder durch eine mittels Druck variabel einstellbare Durchflussmenge an flüssigem Schmelzklebstoff einstellbar ist. Es ist so auch möglich Folien mit lokal unterschiedlichen Dicken einfach herzustellen. Weiterhin ist die Filmdicke auch durch die Vorschubsgeschwindigkeit des zu schützenden Gutes beeinflussbar.

Wie oben bereits beschrieben, kann es vor allem für Schmelzklebstoffe, die bei höheren Temperaturen oxidationsanfällig sind, sinnvoll sein, die Vorrichtung mit einem Vorschmelzbereich stromauf des Hauptschmelzbereiches auszustatten, in dem der Schmelzklebstoff aufgeschmolzen wird. Der Vorschmelzbereich ist dabei vorzugsweise ein eigener beheizbarer Behälter, der über eine Art Schleuse direkt mit dem Behälter des Hauptschmelzbereiches verbunden ist, so dass der aufgeschmolzene Schmelzklebstoff der Schwerkraft folgend in den Behälter des Hauptschmelzbereiches abfliessen kann. Die beiden Behälter können aber auch über Leitungen und wo nötig über ein Pumpsystem miteinander verbunden sein. Für bestimmte Schmelzklebstoffe ist es auch denkbar, einen einzigen Behälter für das Aufschmelzen und das Erhitzen auf Applikationstemperatur vorzusehen.

Es wurde weiterhin gefunden, dass sich die Schutzfolien auch bedrucken lassen. Dies erfolgt typischerweise erst nach dem Abkühlen der Folie. Das Aufbringen der Druckfarbe kann mit dem Fachmann bekannten Applikationstechniken erfolgen. Insbesondere geeignet ist das Bedrucken in mit Tintenstrahltechniken. Auf die Schutzfolie können somit in schwarz oder farbig Beschriftungen, Bilder und Grafiken irgendwelcher Art aufgedruckt werden. Bevorzugt weisen diese Aufdrucke Informations- oder Werbecharakter auf. So lassen sich beispielsweise Produktions-, Auslieferungs- oder Adressdaten an gewünschten Stellen auf die Folie anbringen. Ein besonders bevorzugte Variante ist das Anbringen von maschinenlesbaren Aufdrucken, wie Strichcodes. Andererseits eignen sich die Folien exzellent für das Anbringen von Werbeaufdrucken. Es kann unter Umständen nötig sein, dass die Folie in den Bereichen, in welchen ein Aufdruck angebracht werden soll, einer chemischen und/oder physikalischen Vorbehandlung unterworfen werden muss. So kann beispielsweise eine Koronabehandlung für Polyolefine als Folienmaterial vorteilhaft sein, um eine gute Bedruckbarkeit zu gewährleisten. Bevorzugt ist jedoch, dass eine solche Vorbehandlung nicht nötig ist.

Weitere bevorzugte Ausführungsformen sind Gegenstand weiterer abhängiger Patentansprüche.

Im Folgenden wird der Erfindungsgegenstand anhand bevorzugter Ausführungsbeispiele, welche in den beiliegenden Zeichnungen dargestellt sind, näher erläutert. Grundsätzlich sind in den Figuren gleiche Elemente mit gleichen Bezugszeichen versehen. Die beschriebenen Ausführungsformen stehen beispielhaft für den Erfindungsgegenstand und haben keine beschränkende Wirkung. Es zeigen rein schematisch:
- Fig. 1 und 2: von der Seite eine Vorrichtung zum Applizieren einer erfindungsgemässen Schutzfolie aus Schmelzklebstoff auf ein Automobil in zwei aufeinander folgenden Stadien des Applizierens;
- Fig. 3: die Vorrichtung aus Fig. 1 und 2 von vorne in einem späteren Stadium des Applizierens;
- Fig. 4: einen Spalt zwischen zwei festen Elementen überzogen mit einer erfindungsgemässen Schutzfolie;
- Fig. 5: den Spalt mit der Schutzfolie aus Fig. 4 nach einer Heissluftbehandlung
- Fig. 6 bis Fig. 11: eine weitere Ausführungsform einer Vorrichtung zum Applizieren einer erfindungsgemässen Schutzfolie aus Schmelzklebstoff in verschiedenen Stadien des Verfahrens;
- Fig. 12: eine zur Vorrichtung gemäss den Fig. 6 bis 11 gehörende Heissluftstation,
- Fig. 13: einer weitere Ausführungsform einer Vorrichtung 16 mit Fasspumpe und
- Fig. 14: ein mit Schutzfolie verpackter Gegenstand mit Aufdrucken
a) Gegenstand mit Informations- und Werbeaufdrucken
b) Automobil mit Informations- und Werbeaufdrucken.

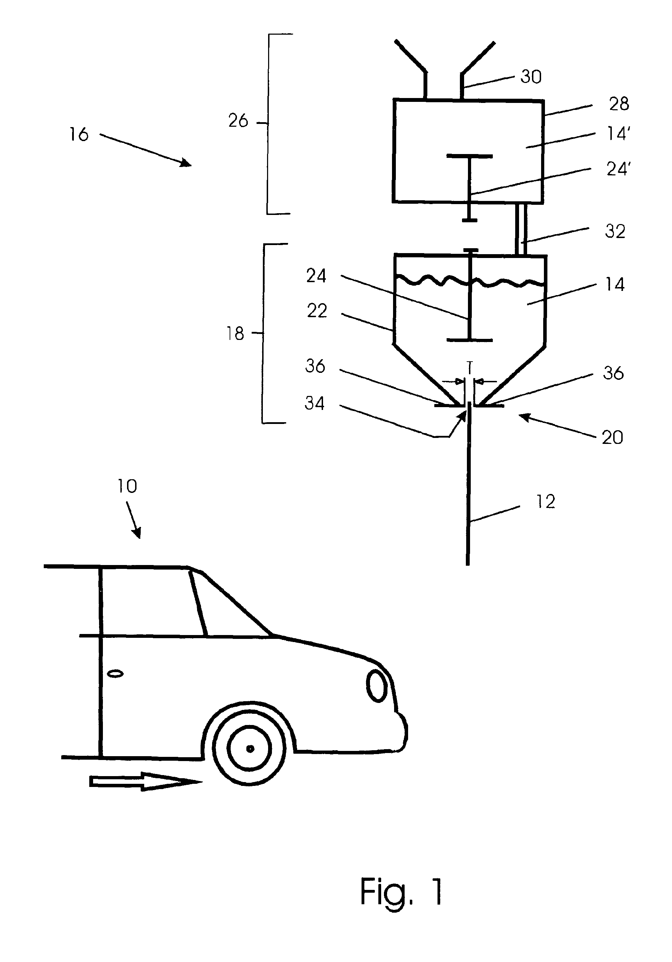

Die Figuren 1 bis 3 zeigen schematisch ein Automobil 10, das mit einer erfindungsgemässen Schutzfolie 12 aus Schmelzklebstoff 14, 14' maskiert wird. Die Vorrichtung 16 zum Applizieren der selbstklebenden Schutzfolie 12 umfasst einen Hauptschmelzbereich 18 mir einer Applikationseinheit 20 und mit einem beheizbaren Behälter 22, der mit Mitteln zum Rühren 24 ausgestattet sein kann. In dem hier gezeigten Beispiel ist dem Hauptschmelzbereich 18 eine Vorschmelzbereich 26 vorgelagert. Der Vorschmelzbereich 26 weist einen beheizbaren Schmelzbehälter 28, gegebenenfalls mit Mitteln zum Rühren 24', auf sowie Mittel zum Befüllen 30 des Schmelzbehälters 28. Des Weiteren sind in diesem Beispiel der beheizbare Schmelzbehälter 28 des Vorschmelzbereiches 26 und der beheizbare Behälter 22 des Hauptschmelzbereiches 18 mittels einer Leitung 32, gegebenenfalls bevorzugt über einer Pumpe, so miteinander verbunden, dass jederzeit ein Nachfliessen des aufgeschmolzenen Schmelzklebstoffes 14 in ausreichender Menge gewährleistet ist.

Die Applikationseinheit 20 ist in dem hier gezeigten Beispiel als direkter Auslass aus dem Behälter 22 des Hauptschmelzbereiches 18 konzipiert und in Form einer Breitschlitzdüse 34 ausgestaltet. Die Schlitztiefe T der Breitschlitzdüse 34 ist mit Hilfe von Blenden 36, die seitlich in den Schlitz 34 hinein- und hinausbewegt werden können, regulierbar. Über die Schlitztiefe T ist auch die Dicke der Folie 12 einstellbar. Die Schlitzbreite Z kann ebenfalls eingestellt werden. Hierfür sind weitere Blenden 38 vorgesehen, die in diesem Beispiel in einer im Wesentlichen senkrechten Bewegungsrichtung bezüglich der Bewegung der ersten Blenden 36, in den Schlitz 34 hinein und aus diesem heraus bewegbar sind. Über die Blenden 38 lässt sich die Schlitzbreite Z, die etwa der Folienbreite Z' entspricht, vorgeben. Die Folie weist typischerweise im unteren Bereich wegen des Abkühlens und/oder dem Einfluss der Schwerkraft. ein kleinere Breite Z" auf. Um einen Gegenstand, wie z.B. ein Automobil gut, das heisst vorne, hinten, oben und auf den Seiten, mit einer Schutzfolie 12 aus Schmelzklebstoff 14, 14' verpacken zu können, wählt man die Schlitzbreite Z, bzw. die Folienbreite Z', vorzugsweise so, dass sie etwa der Breite B des zu verpackenden Gegenstandes addiert mit der doppelten Höhe H des zu verpackenden Gegenstandes entspricht: Z = B + 2H bzw. Z' = B + 2H bzw. Z" = B + 2H, insbesondere Z" = B + 2H.

Wie aus den Fig. 1 bis 3 zu erkennen, wird der beheizbare Schmelzbehälter 28 des Vorschmelzbereiches 26 über ein Mittel zum Befüllen 30, das hier die Form eines Trichters hat, mit festem Schmelzklebstoff 14' befüllt. Der feste Schmelzklebstoff 14' liegt in diesem Beispiel in Form von Granulat vor. Denkbar wäre aber auch die Lieferung des festen Schmelzklebstoffs 14' in Form von Pulver, Schuppen, Fäden, Stangen, oder Blöcken. Im Schmelzbehälter 28 wird der feste Schmelzklebstoff 14' gegebenenfalls unter Rühren mit Hilfe der Rührmittel 24' aufgeschmolzen. Der aufgeschmolzene Schmelzklebstoff 14 fliest hier via die Leitung 32 in den Behälter 22 des Hauptschmelzbereiches 18. Im beheizbaren Behälter 22 wird der aufgeschmolzene, oft eher zähflüssige Schmelzklebstoff 14 auf die vorbestimmte Applikationstemperatur erhitzt. Die Applikationstemperatur wird dabei auf die Temperatur des zu verpackenden Gegenstandes und seine Wärmeleitfähigkeit abgestimmt. Der Gegenstand sollte daher für eine gute Applikation in sich keine grossen Temperaturgradienten aufweisen. Die Applikationstemperatur wird so gewählt, dass der Schmelzklebstoff 14 beim Abfliessen eine Folie 12 ausbildet. Die Dicke der Schutzfolie 12 wird im Zusammenhang mit den Eigenschaften des Schmelzklebstoffs 14 abgestimmt auf die Funktion, die die Schutzfolie 12 später ausüben soll, und auf die Form des zu verpackenden Gegenstandes. Ausserdem werden die Foliendicke und die Geschwindigkeit, mit der der zu verpackende Gegenstand für die Applikation quer zur Folie 12 bewegt wird, aufeinander abgestimmt. Auf diese Weise kann ein Reissen der Folie während des Applizierens verhindert werden.

In dem in den Fig. 1 bis 3 gezeigten Beispiel soll die Schutzfolie 12 aus Schmelzklebstoff 14, 14' als selbstklebende Schutzfolie 12 auf ein Automobil 10 appliziert werden. Als Schmelzklebstoff 14, 14' wird daher ein thermoplastischer Schmelzklebstoff auf Polyesterbasis oder auf Basis eines Polyamids oder ataktischen Poly-α-olefins gewählt, dessen resultierende, selbstklebende Schutzfolie 12 transparent ist, eine entsprechende Anfangshaftung sowie eine entsprechende Wind- und Witterungsbeständigkeit aufweist, und sich nach Gebrauch wieder rückstandslos abziehen lässt ohne zu reissen. Ein Beispiel für einen solchen Schmelzklebstoff 14, 14' ist ein hochmolekularer, linearer, teilkristalliner, gesättigter Polyester, insbesondere mit einem Molekulargewicht von 15'000 bis 20'000 g/mol.

Die Applikationstemperatur wird so gewählt, dass die beim Abfliessen des flüssigen Schmelzklebstoffs 14 resultierende selbstklebende Schutzfolie 12 eine genügende Benetzung mit der lackierten Oberfläche des Automobils 10 eingeht und die Anfangshaftung den gewünschten Vorgaben entspricht. Für eine gute Benetzung sind in der Regel Temperaturdifferenzen zwischen dem Gegenstand und der Applikationstemperatur nötig, die bei 50°C und höher liegen. Die Applikationstemperatur für den oben genannten Schmelzklebstoff 14 liegt bei etwa 200°C, die Temperatur der Automobiloberfläche entspricht etwa Raumtemperatur. Damit die selbstklebende Schutzfolie 12 aus dem genannten Schmelzklebstoff 14 auf dem Automobil applizierbar ist und die gewünschte Schutzfunktion ausüben kann, wird die Folie 12 mit einer Dicke von etwa 100 Mikrometer appliziert. Die Breite Z' der selbstklebende Schutzfolie 12 bzw. der Breitschlitzdüse 34 in dem gezeigten Beispiel, wird so eingestellt, dass sie der Breite B addiert mit der doppelten Höhe H des Automobils 10 entspricht.

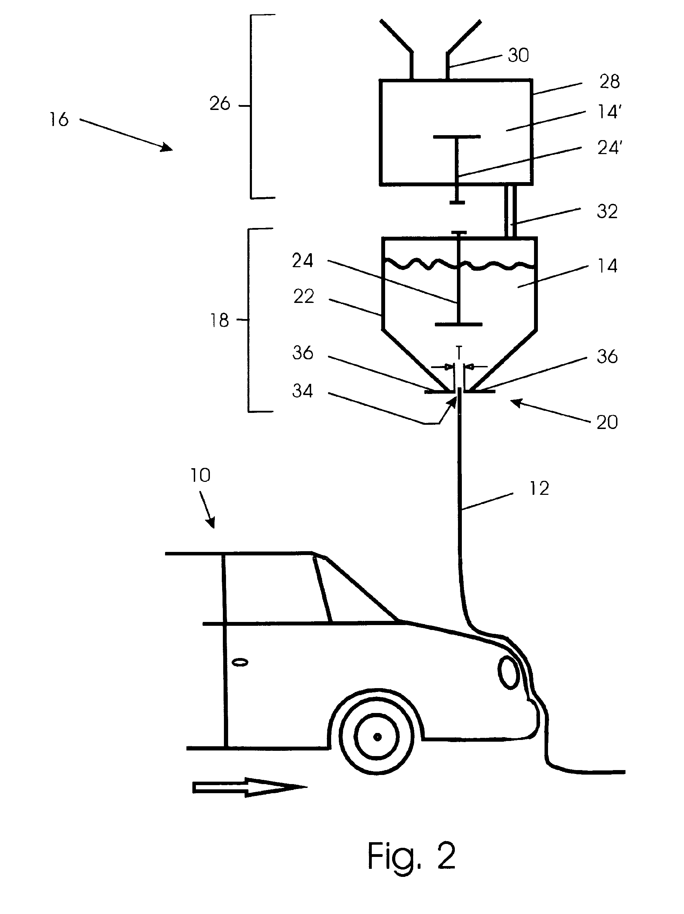

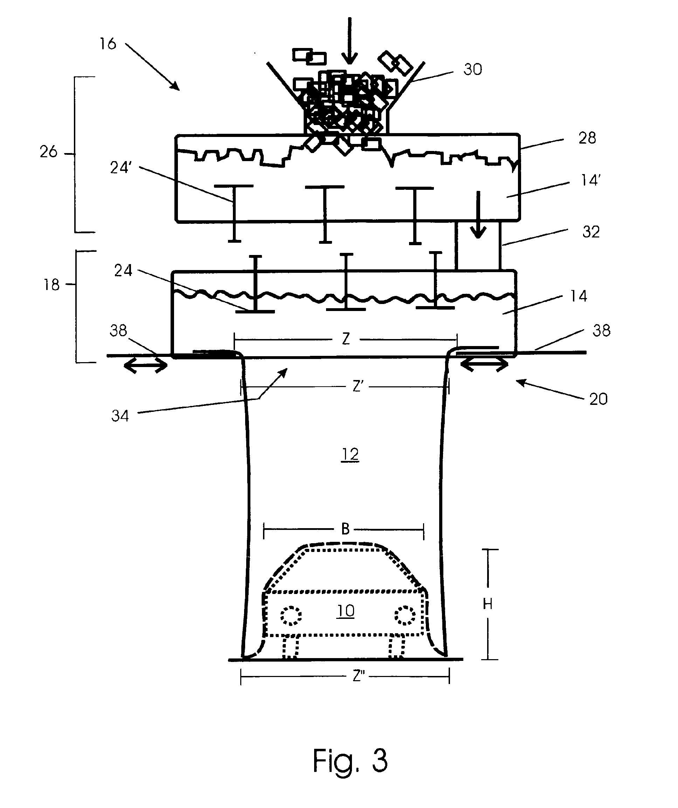

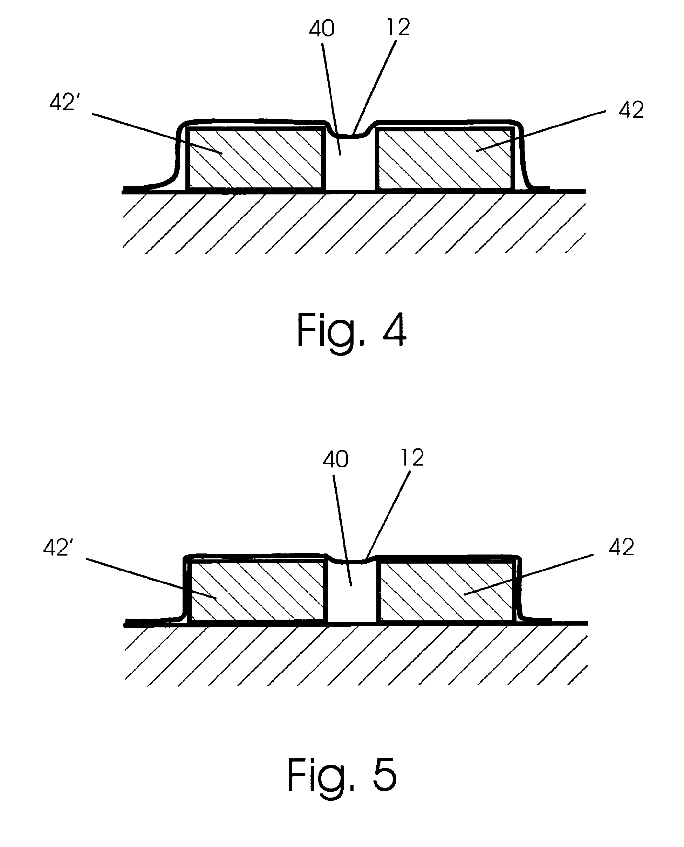

Für das Applizieren der selbstklebenden Schutzfolie 12 auf dem Automobil 10, wird dieses, wie in den Fig. 1 bis 3 dargestellt, quer zur Folie 12 bewegt. Dabei kann es gefahren, oder wie in der Automobilfertigung üblich, mit geeigneten Mitteln gefördert werden. Zeitlich auf das ankommende Automobil abgestimmt, wird dem flüssigen, auf Applikationstemperatur erhitzten Schmelzklebstoff 14 das Abfliessen aus der Breitschlitzdüse 34 ermöglicht. Die selbstklebende Schutzfolie 12 überzieht das Automobil 10 und bildet dabei dessen äussere Konturen nach, vgl. Fig. 2 und 3. Ist das ganze Automobil 10 in Förderrichtung gesehen inklusive seiner Rückseite mit Folie 12 überzogen, so wird die Folie 12 durchtrennt (nicht dargestellt) und das Automobil 10 kann weiter bewegt werden. Um an Stellen schwieriger äusserer Konturen ein enges Anliegen der Schutzfolie 12 und ein festes Kleben der selbstklebende Schutzfolie 12 auf dem Untergrund zu erreichen, wird das mit der selbstklebende Schutzfolie 12 überzogene Automobil 10 mit Heissluft behandelt (nicht dargestellt). Die selbstklebende Schutzfolie 12 aus dem Schmelzklebstoff 14, 14' schrumpft dadurch passgenau auf die äusseren Konturen des Automobils 10 auf, wobei Spalten überspannt werden, wie dies beispielhaft in den Fig. 4 und 5 dargestellt ist. Die selbstklebende Schutzfolie 12 klebt fest an der Oberfläche des Automobils 10. Gegebenfalls kann überstehende Folie 12 nun noch entfernt werden und das Automobil 10 ist fertig für den Transport sowie die Lagerung im Freien. Der Schmelzklebstoff 14, 14' für die Schutzfolie ist in diesem Beispiel so gewählt, dass die selbstklebende Schutzfolie 12 witterungsbeständig ist und sich die Schutzfolie auch bei Fahrtwind oder Sturmböen nicht von der Oberfläche des Automobils ablöst. Ein bewusstes Abziehen der Schutzfolie, insbesondere am Stück, ist dagegen rückstandslos möglich.

In den Figuren 4 und 5 ist die Situation eines mit einer Schutzfolie 12 aus Schmelzklebstoff 14, 14' überzogenen Spalts 40 zwischen zwei festen Elementen 42, 42' rechteckigen Querschnitts dargestellt. Figur 4 zeigt die Situation vor der Behandlung mit Heissluft, Fig. 5 die Situation nach der Behandlung mit Heissluft. Deutlich ist in Fig. 5 zu erkennen, wie sich die Schutzfolie 12 nach der Heissluftbehandlung enger an die äusseren Konturen der festen Elemente 42, 42' anschmiegt, über dem Spalt 40 aber gespannt ist und nicht mehr der Kontur der Elemente 42, 42' folgt.

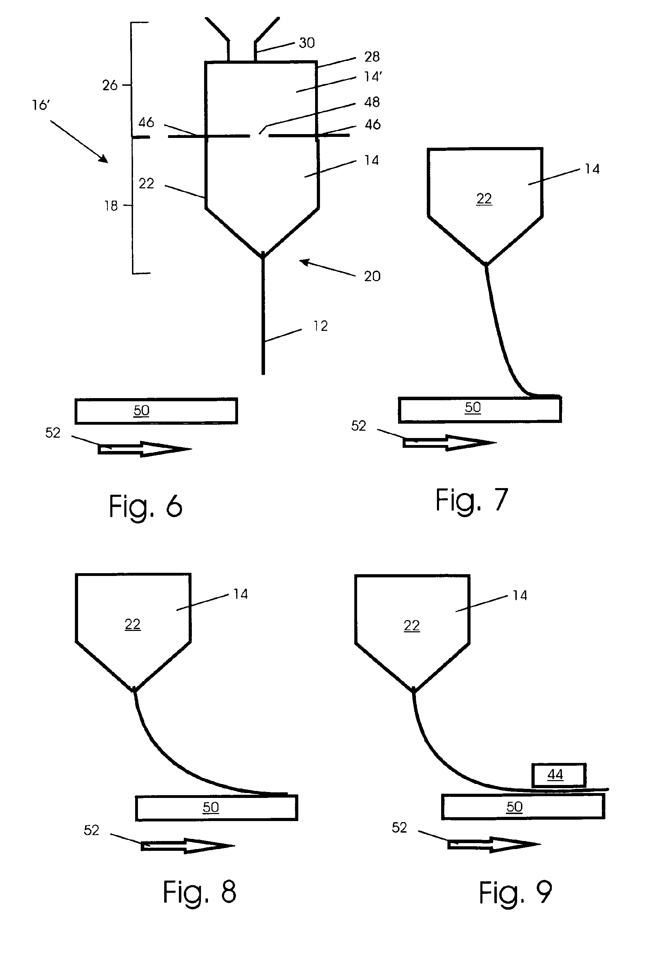

In den Fig. 6 bis 12 ist die allseitige Verpackung eines Gegenstandes 44 mit einer Schutzfolie 12 aus einem Schmelzklebstoff 14, 14' sowie eine Ausführungsform einer für dieses Verpackungsverfahren geeigneten Vorrichtung 16' gezeigt.

Die in den Fig. 6 bis 11 gezeigte Vorrichtung 16' ist im Prinzip gleich aufgebaut wie die oben in den Fig. 1 bis 3 beschriebene Vorrichtung 16. Im Gegensatz zu der oben beschriebenen Vorrichtung 16 ist hier aber der beheizbare Schmelzbehälter 28 des Vorschmelzbereichs 26 oberhalb des Behälters 22 des Hauptschmelzbereichs 18 und an diesen angrenzend angeordnet. Die beiden Behälter 22, 28 sind durch eine mit Hilfe von einem oder mehreren Schliessern 46 verschliessbare Öffnung 48 direkt miteinander verbunden. Auf diese Weise lässt sich die Leitung 32 sparen. Der Einfachheit halber ist in den Figuren 7 bis 11 auf die detaillierte Darstellung des Vorschmelzbereiches 26 verzichtet und nur noch der beheizbare Behälter 22 des Hauptschmelzbereiches mit der Applikationseinheit 20 dargestellt worden. Ein weiterer Unterschied zu der oben beschriebenen Vorrichtung 16 ist ein in dieser Vorrichtung 16' vorgesehenes Tragelement 50, das quer zur Folie 12 in eine erste Richtung, Pfeil 52, und in eine entgegengesetzte zweite Richtung, Pfeil 54, bewegbar ist. Die Bewegung kann mittels angetriebener Transportrollen, mittels Transportband, mittels Hubantrieb oder in sonst geeigneter Weise erfolgen (nicht dargestellt). Das Tragelement 50 ist bevorzugt aus einem antihaftenden Material, insbesondere Teflon, gefertigt oder damit beschicht, so dass die selbstklebende Schutzfolie 12 nicht darauf haftet.

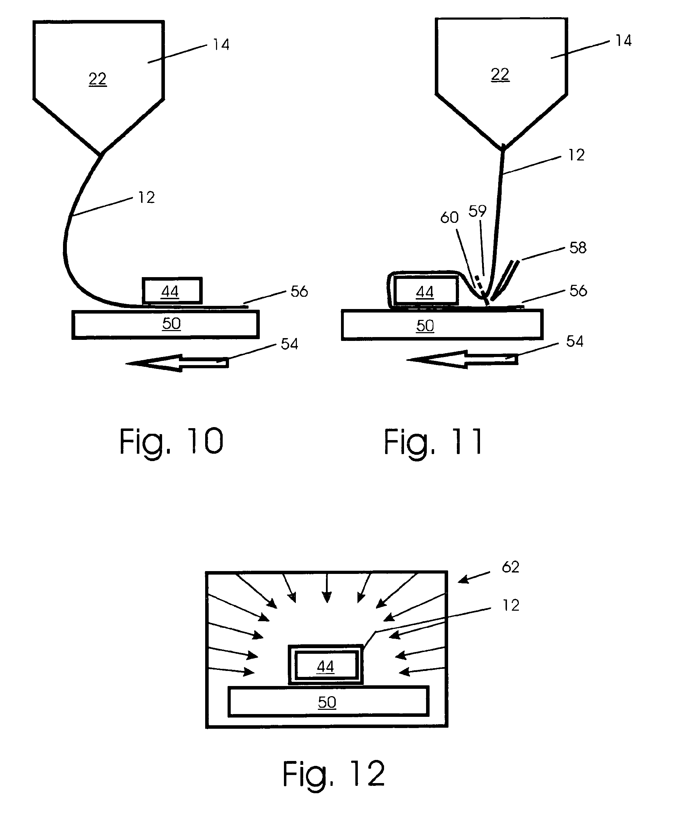

Wie aus den Fig. 6 bis 11 erkennbar ist, wird das Tragelement 50 in Richtung 52 quer zur Folie 12 bewegt, wobei die Schutzfolie 12 auf dem Tragelement 50 als Folienfilm abgelegt wird, vgl. Fig. 6 bis 8. Ist eine genügend grosse Fläche des Tragelementes 50 mit Folienfilm belegt, wird der einzupackende Gegenstand 44 auf den Folienfilm gelegt, siehe Fig. 9. Dabei steht das freie Ende 56 des Folienfilms über und schaut in Richtung 52 unter dem Gegenstand 44 hervor. Das Tragelement 50 wird dann in die entgegengesetzte zweite Richtung 54 bewegt, so dass der Gegenstand 44 in die Schutzfolie 12 eingeschlagen wird; Fig. 10 und 11. Zum Ablegen des Gegenstandes 44 kann das Tragelement 50 kurz angehalten werden, es kann aber auch nur ein Richtungswechsel erfolgen, das hängt davon ab wie schnell das Tragelement 50 in die beiden Richtungen 52, 54 bewegt wird und wie viel Zeit für eine genügend genaue Platzierung des Gegenstandes 44 benötigt wird. Beim Einschlagen des Gegenstandes 44 in die Schutzfolie 12, wird so viel Folie 12 über den Gegenstand 44 in Richtung 52 gezogen, dass nach einem Abtrennen der Folie 12 das dann freie zweite Ende 60 partiell auf dem ersten freien Ende 56 aufliegt. Das Abtrennen der Folie kann entweder durch ein Abschneiden, insbesondere auf dem Tragelement 50, angedeutet durch Messer 58 und die gestrichelte Linie 59, oder bevorzugt durch das kurzzeitige Schliessen der Blenden 36 erfolgen.

Wird die Folienbreite so gewählt wie oben für die Fig. 1 bis 3 beschrieben, fällt die Folie zudem mit ihren überstehenden Rändern über die Seiten des Gegenstandes herab, so dass der Gegenstand 44 ganz umhüllt ist. Das Tragelement 50 mit dem in Schutzfolie 12 eingeschlagenen Gegenstand 44 kann dann in eine Heissluftstation 62 bewegt werden, wie dies in Fig. 12 dargestellt ist. Unter Heissluft verschweissen die überstehenden Seiten und die beiden freien Enden 60, 56 der Schutzfolie 12 miteinander und die Schutzfolie 12 schrumpft passgenau auf den Gegenstand 44 auf. Der Gegenstand 44 ist nun fertig in Schutzfolie 12 verpackt und gut geschützt für Transport und Lagerung. Statt einer Heissluftbehandlung ist auch ein einfaches Verschweissen der überstehenden seitlichen Folienränder und der freien Enden 60, 56 möglich. Ein solches Verschweissen kann z.B. mit Hilfe eines Schweissstempels oder einer bewegbaren dünnen Heissluftdüse erfolgen.

Soll die Schutzfolie 12 nicht selbstklebend sein, so kann die Applikationstemperatur so gewählt werden, dass keine oder nur eine äusserst ungenügende Benetzung mit dem zu verpackenden Gut stattfindet. Ist das zu schützende Gut, wie oben für Fig. 6 bis 11 beschrieben, in eine nicht selbstklebende Schutzfolie 12 aus Schmelzklebstoff 14, 14' eingeschlagen worden, so können nun ebenfalls entweder die an den Seiten überstehenden Folienränder und die freien Enden 60, 56 verschweisst werden, oder die Folie 12 kann mittels Heissluft auf den Gegenstand 44 aufgeschrumpft und alle überstehenden Ränder und Enden miteinander verschweisst werden.

Ein Tragelement 50, das quer zur Folie 12 bewegbar ist, kann natürlich auch eingesetzt werden, wenn ein Gegenstand nur mit der Schutzfolie 12 überzogen werden soll, wie dies für das Automobil in den Fig. 1 bis 3 gezeigt wurde. Für eine solche Anwendung muss das Tragelement 50 nur in eine Richtung 52 bewegbar sein und eine allfällige Heissluftstation ist dann stromabwärts von der Applikationseinheit 20 in Richtung 52 angeordnet. Eine flexibel einsetzbare Vorrichtung kann natürlich für beide Möglichkeiten die verschiedenen Elemente der beschriebenen Vorrichtungen in sinnvoller Weise miteinander kombiniert aufweisen.

Wie gezeigt, gibt es für das Applizieren von Schutzfolien hergestellt aus einem Schmelzklebstoff 14, 14' verschiedene Verfahrensvarianten, wobei die Schutzfolie 12 aus Schmelzklebstoff 14, 14' selbstklebend oder aber auch nicht selbstklebend appliziert werden kann. Es sind aber über die hier vorgestellten Möglichkeiten hinaus weitere Variationen möglich, z.B. auch durch sinnvolle Kombination verschiedener gezeigter Verfahrenselemente, so dass die hier vorgestellten Verfahrensvarianten nicht limitierend sind.

Ebenso gibt es über die hier grafisch dargestellten und detaillierter beschriebenen Ausführungsformen der Vorrichtung 16, 16' zum Applizieren von Schutzfolien 12 aus Schmelzklebstoff 14, 14' hinaus noch weitere Ausführungsform für solche Vorrichtungen. So kann die Applikationseinheit 20 beispielsweise statt als Breitschlitzdüse 34 auch aus vielen einzeln, nebeneinander platzierten, kleinen Düsen gebildet sein. Die Breite und die Dicke der aus dem Abfliessen des flüssigen Schmelzklebstoffs 14 resultierenden Folie 12 kann dann durch Zu- und Wegschalten von Düsen geregelt werden. Statt durch die Schwerkraft, kann das Abfliessen des flüssigen Schmelzklebstoffs 14 auch mittels Pumpen unter Druck erfolgen. In einem solchen Fall lässt sich die Foliendicke auch über den Druck und somit über die durch die Düse 34 bzw. die Düsen fliesende Menge an flüssigem Schmelzklebstoff 14 beeinflussen. Anstelle eines beheizbaren Behälters 22 mit integrierter Applikationseinheit 20 im Hauptschmelzbereich 18 kann die Applikationseinheit 20 auch entfernt von dem Behälter 22 angeordnet sein. Die Applikationseinheit 20 ist dann über eine oder mehrere Zuführleitungen mit dem Behälter 22 verbunden, die den flüssigen Schmelzklebstoff 14 der Applikationseinheit 20 zuführen. Diese Zuführleitungen sind vorzugsweise isoliert oder bei längeren Leitungen beheizbar, damit die flüssige Schmelzklebstoff 14 auf ihrer Applikationstemperatur gehalten werden kann. Für bestimmte Schmelzklebstoffe 14, 14' kann unter gewissen Umständen auf den Vorschmelzbereich 26 verzichtet werden, z.B. Schmelzklebstoffe 14, 14', die gegen Oxidation unempfindlich sind oder die bei Raumtemperatur in zähflüssiger Form vorliegen. Anlagen die nur mit solchen Schmelzklebstoffen 14, 14' betrieben werden, müssen daher keinen beheizbaren Schmelzbehälter 28 aufweisen, so dass die Mittel zum Befüllen 30 am beheizten Behälter 22 des Hauptschmelzbereiches 18 vorgesehen sind. Als Mittel zum Befüllen können statt Trichter auch Einfüllstutzen oder einfach verschliessbare Öffnungen oder Pumpen oder Extruder etc. vorgesehen sein.

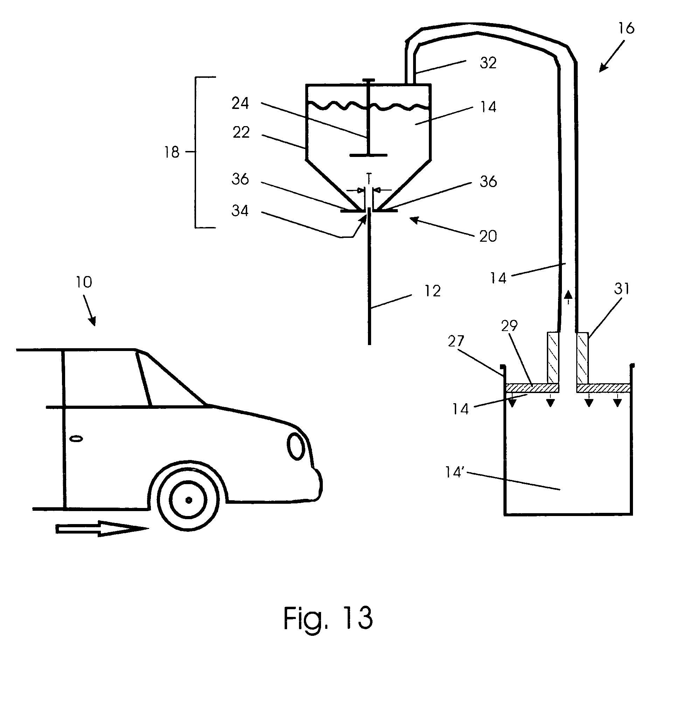

Figur 13 zeigt eine bevorzugte Ausführungsform einer Vorrichtung 16, bei welcher im Vergleich zu Figur 1 der Vorschmelzbereich 26 eine Fasspumpe darstellt. In dieser Fasspumpe ist ein Fass 27 angebracht, in dem durch eine beheizbare und durch hydraulische Mittel 31, beispielsweise eine hydraulische Presse, verschobene Folgeplatte 29 der feste Klebstoff 14' aufgeschmolzen und als flüssiger Klebstoff 14 über eine Leitung 32 in den Hauptschmelzbereich 18 gepumpt wird. Wenn das Fass 27 leer gepresst wird, wird die Folgeplatte 29 zurückgefahren, ein neues offenes Fass 27 positioniert, und die Folgeplatte 29 wieder angefahren. Während dieser Zeit des Wechsels fliesst kein Klebstoff 14 mehr durch die Leitung. Um trotzdem mit dem Verpackungsprozess weiterzufahren, benötigt der Hauptschmelzbereich 18 ein genügend grosses Speicher-Volumen, so dass der Schmelzklebstoff kontinuierlich in der benötigen Menge abfliessen kann.

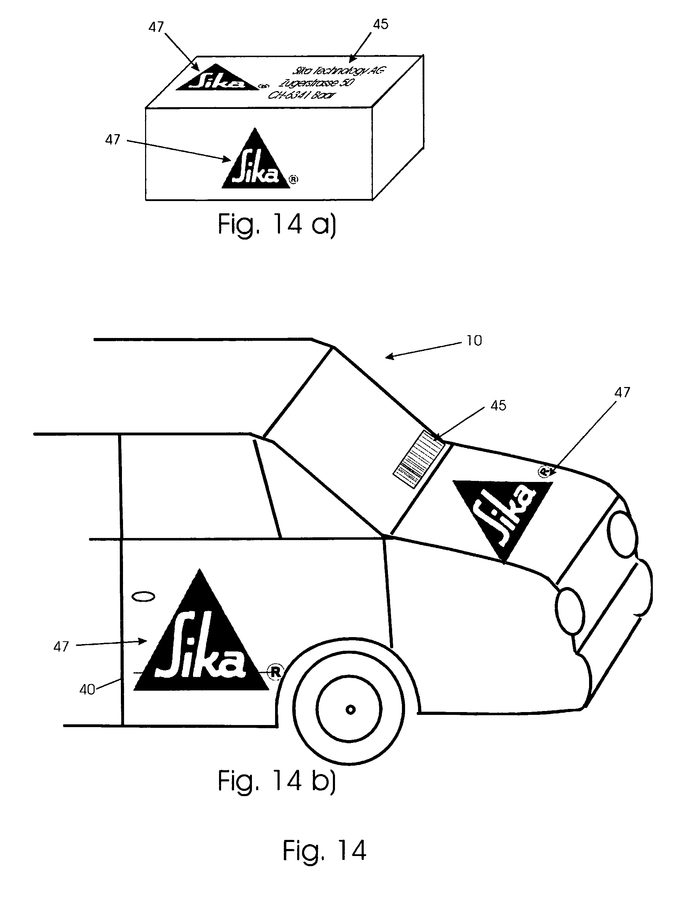

Figur 14 zeigt eine schematische Darstellung von mit Schutzfolien eingepackten Gütern, welche bedruckt sind. Figur 14 a) zeigt einen mit Schutzfolie 12 eingepackten Gegenstand 44, welcher auf der Oberfläche der Schutzfolie 12 einen Aufdruck mit Informationsinhalt 45 und Aufdrucke mit Werbeinhalt 47 aufweist. Figur 14 b) zeigt ein Automobil 10, welches mit einer mit Schutzfolie 12 geschützt ist, auf deren Oberfläche ein Aufdruck mit Informationsinhalt 45 und Aufdrucke mit Werbeinhalt 47 aufgebracht sind. In beiden Darstellungen ist als Beispiel für einen Aufdruck mit Werbeinhalt 47 ein Logo dargestellt. Als Beispiel für einen Aufdruck mit Informationsinhalt 45 ist eine Adresse, respektive ein Strichcode, dargestellt. Das Aufbringen des Ausdruckes erfolgt beispielsweise mittels eines, nicht dargestellten, Aufdruckgerätes, insbesondere eines Tintenstrahldruckkopfes. Das Aufbringen der Aufdruckes kann stromabwärts in der Verpackungslinie oder nachträglich ausserhalb der Verpackungslinie erfolgen.

Wie dies zeigt, sind auch für die Vorrichtung verschiedenste Ausführungsformen denkbar. Die gezeigten Variationen und Kombinationen davon sind daher nicht limitierend. Ebenso wenig sollen die näher beschriebenen Schmelzklebstoffe 14, 14' als limitierend angesehen werden.

### Beispiele

Es wurden die in Tabelle 1 angegebenen Materialien aufgeschmolzen und auf ein Automobillackblech heiss appliziert. Bei Abkühlen wurde der Film mit dem Finger auf Klebrigkeit und Weichheit beurteilt. Hierfür wurde der folgende Beurteilungsschlüssel angewandt:
+ nicht klebrig, geeignet
o leicht klebrig, noch geeignet
- klebrig, nicht geeignet

**Tabelle 1.**

| Eignung als Schmelzklebstoff Klebrigkeit | | | | | |
|---|---|---|---|---|---|
| **Nummer** | **Material** | **Basis** | **60°C** | **70°C** | **80°C** |
| ***K1*** | SikaMelt 9170 | ataktisches Poly-α-olefin | + | + | + |
| ***K2*** | Tivomelt 9058/90 | ataktisches Poly-α-olefin | + | + | + |
| ***K3*** | Vestoplast 408 | ataktisches Poly-α-olefin | + | + | + |
| ***K5*** | UNI-REZ 2620 | Polyamid | + | + | + |
| ***K7*** | UNI-REZ 2635 | Polyamid | + | + | o |
| ***K10*** | ***PES 1*** | Polyester BD/HD/T/IP ^{×} MG=15'000-20'000 g/mol Erweichungspunkt =130°C* | + | + | + |
| ***K11*** | ***PES 2*** | Polyester BD/HD/T/IP ^{×} MG=15'000-20'000 g/mol Erweichungspunkt =118°C* | + | + | + |
| ***K12*** | ***PES 3*** | Polyester BD/T/IP ^{×} MG=15'000-20'000 g/mol Erweichungspunkt =142°C* | + | + | + |
| ***K13*** | ***PES 4*** | Polyester BD/T/IP/A ^{×} MG=15'000-20'000 g/mol Erweichungspunkt =135°C * | + | + | + |
| ***K14*** | ***PES 5*** | Polyester BD/T/IP ^{×} MG=15'000-20'000 g/mol Erweichungspunkt =138°C* | + | + | + |

| | | | | | |
|---|---|---|---|---|---|
| *Ring Kugel, in Anlehnung an DIN ISO 4625 | | | | | |
| ^{×}BD=Butandiol, HD=Hexandiol, T=Terephtalsäure, IP=Isophtalsäure, A=Adipinsäure | | | | | |

Weiterhin wurde von ***K13*** und ***K14*** ein Bewitterungstest nach DIN 53387 vorgenommen. Hierfür wurde ***K13*** und ***K14*** aufgeschmolzen und heiss auf Automobillackbleche mittels eines Rakels ein 100 Mikrometer dicker Film appliziert. Nach Abkühlung wurde das beschichtete Blech während 1000 Stunden dem Test der künstlichen Bewitterung nach DIN 53387 unterworfen.

**Tabelle 2.**

| Eigenschaften nach Bewitterungstest | | | |
|---|---|---|---|
| Nummer | Material | Basis | Eigenschaften nach 1000 h Bewitterung |
| ***K13*** | ***PES 4*** | Polyester | Gute Haftung zum Blech Lässt sich gut abziehen Sehr gut geeignet |
| ***K14*** | ***PES 5*** | Polyester | Gute Haftung zum Blech Lässt sich gut abziehen Gut geeignet |

### Bezugszeichenliste

- H: Höhe
- B: Breite
- T: Schlitztiefe
- Z: Schlitzbreite
- Z': Folienbreite
- Z": Folienbreite im unteren Bereich
- 10: Automobil
- 12: Folie, Schutzfolie
- 14: Schmelzklebstoff (flüssig)
- 14': Schmelzklebstoff (fest)
- 16, 16': Vorrichtung
- 18: Hauptschmelzbereich
- 20: Applikationseinheit
- 22: beheizbarer Behälter
- 24, 24': Mittel zum Rühren
- 26: Vorschmelzbereich
- 27: Fass
- 28: beheizbarer Schmelzbehälter
- 29: beheizbare Folgeplatte
- 30: Mittel zum Befüllen
- 31: hydraulische Mittel
- 32: Leitung
- 34: Breitschlitzdüse
- 36: Blenden
- 38: weitere Blenden
- 40: Spalt
- 42, 42': feste Elemente
- 44: Gegenstand
- 46: Schliesser
- 48: Öffnung
- 50: Tragelement
- 52: erste Richtung
- 54: zweite Richtung
- 56: freies Ende
- 58: Messer
- 59: gestrichelte Linie
- 60: zweites freies Ende
- 62: Heissluftstation

## Patentansprüche

1. Schutzfolie (12) aus Kunststoff, **dadurch gekennzeichnet, dass** sie einlagig, trägerfrei aus einem Schmelzklebstoff (14, 14') hergestellt ist.

2. Schutzfolie (12) nach Anspruch 1, **dadurch gekennzeichnet, dass** sie selbstklebend und insbesondere transparent ist.

3. Schutzfolie (12) nach Anspruch 1 oder 2, **dadurch gekennzeichnet, dass** es sich bei dem Schmelzklebstoff (14, 14') um einen thermoplastischem Schmelzklebstoff handelt basierend auf einem Stoff aus der folgenden Gruppe von Stoffen: thermoplastische Polyurethane thermoplastische Polyamide, thermoplastische Co-Polyamide, thermoplastische Polyester, thermoplastische Co-Polyester, thermoplastische Polyolefine, insbesondere ataktische Poly-α-olefine, Polypropylen oder Polyethylen, thermoplastischen Ethylen/Vinylacetat-Copolymere oder einer Kombination davon.

4. Schutzfolie (12) nach Anspruch 1 oder 2, **dadurch gekennzeichnet, dass** es sich bei dem Schmelzklebstoff (14, 14') um einen reaktiven Schmelzklebstoff handelt, insbesondere basierend auf reaktivem PUR oder reaktivem Polyolefin oder einer Kombination.

5. Schutzfolie (12) nach einem der Ansprüche 1 bis 4, **dadurch gekennzeichnet, dass** Lichtschutz- und/oder Oxidaionsinhibitoren enthalten sind.

6. Schutzfolie (12) nach einem der Ansprüche 1 bis 5, **dadurch gekennzeichnet, dass** sie eine Dicke im Bereich von 50 Mikrometer bis 500 Mikrometer, insbesondere 200 Mikrometer bis 300 Mikrometer, aufweist.

7. Verfahren zum applizieren einer Schutzfolie, **dadurch gekennzeichnet, dass** ein Schmelzklebstoff (14, 14') in einem Hauptschmelzbereich (18) auf Applikationstemperatur erhitzt wird, dass er anschliessend aus dem Hauptschmelzbereich (18) abfliesst, wobei der Abfluss und Applikationstemperatur so geregelt werden, dass sich eine Folie (12) gewünschter Breite ausbildet, und dass ein mit der Folie (12) zu schützendes Gut derart quer zur Folie (12) bewegt wird, dass die Folie (12) das Gut in gewünschter Weise überzieht.

8. Verfahren nach Anspruch 7, **dadurch gekennzeichnet, dass** die Folienbreite (Z') beim Austritt aus dem Hauptschmelzbereich (18) so eingestellt wird, dass sie etwa der Breite (B) des mit der Folie zu schützenden Gutes addiert mit der doppelten Höhe (H) des Gutes entspricht.

9. Verfahren nach Anspruch 7 oder 8, **dadurch gekennzeichnet, dass** der Schmelzklebstoff (14, 14') auf eine Applikationstemperatur erhitzt wird die im Bereich von 80° und 250°C liegt, insbesondere zwischen 130°C und 210°C, bevorzugt zwischen 160°C und 200°C, wobei der Schmelzklebstoff (14, 14') vorzugsweise in einem Vorschmelzbereich (26) aufgeschmolzen wird, ehe er im Hauptschmelzbereich (18) auf die Applikationstemperatur erhitzt wird.

10. Verfahren nach einem der Ansprüche 7 bis 9, **dadurch gekennzeichnet, dass** die Schutzfolie (12) als selbstklebende Schutzfolie (12) eingesetzt wird und hierfür die Temperatur des Gutes, auf dem die selbstklebende Schutzfolie (12) kleben soll, und die Applikationstemperatur des Schmelzklebstoffes (14, 14') so aufeinander abgestimmt werden, dass die Schutzfolie (12) eine genügende Benetzung mit der Oberfläche des Gutes eingeht, wobei die Temperaturdifferenz zwischen dem Gut und der Applikationstemperatur vorzugsweise wenigstens 50°C beträgt.

11. Verfahren nach einem der Ansprüche 7 bis 10, **dadurch gekennzeichnet, dass** die Oberflächentemperatur des zu schützenden Gutes nicht mehr als 80 °C und nicht weniger als 0°C, insbesondere zwischen 20°C und 40°C, beträgt.

12. Verfahren nach einem der Ansprüche 7 bis 11, **dadurch gekennzeichnet, dass** die Schutzfolie (12) auf ein abstossend beschichtetes, quer zur Folie (12) in eine erste Richtung (52) bewegtes Tragelement (50) abfliesst, so dass auf dem Tragelement (50) ein Folienfilm abgelegt wird, dass das mit der Schutzfolie (12) zu schützende Gut auf den auf dem Tragelement (50) abgelegten Folienfilm gelegt wird und das Tragelement (50) dann in entgegengesetzter zweiter Richtung (54) quer zur Folie (12) bewegt wird, so dass das Gut die Schutzfolie (12) eingeschlagen wird.

13. Verfahren nach einem der Ansprüche 7 bis 12, **dadurch gekennzeichnet, dass** die Schutzfolie (12) auf gewünschter Länge abgetrennt wird.

14. Verfahren nach einem der Ansprüche 7 bis 13, **dadurch gekennzeichnet, dass** das mit der Schutzfolie (12) überzogene Gut mit Heissluft behandelt wird, so dass die Folie (12) schrumpfend sich passgenau um die Aussenkonturen des Gutes legt.

15. Vorrichtung (16, 16') zum Applizieren einer Schutzfolie (12) aus Schmelzklebstoff (14, 14') mit einem Hauptschmelzbereich (18), in dem der Schmelzklebstoff (14, 14') auf seine Applikationstemperatur erhitzt wird, und der eine Applikationseinheit (20) aufweist, über die der verflüssigte Schmelzklebstoff (14) so abfliesst, dass er eine zusammenhängende Folie (12) vorbestimmter Breite und vorbestimmter Dicke bildet.

16. Vorrichtung (16, 16') nach Anspruch 15, **dadurch gekennzeichnet, dass** die Applikationseinheit (20) als Breitschlitzdüse (34) ausgebildet ist, deren Schlitztiefe (T) und Schlitzbreite (Z) vorzugsweise einstellbar sind, und zwar insbesondere derart einstellbar, dass die Breite (Z') der resultierenden Folie (12) etwa der Breite (B) eines mit der Folie (12) zu schützenden Gutes addiert mit der doppelten Höhe (H) des Gutes entspricht.

17. Vorrichtung (16, 16') nach Anspruch 15 oder 16, **dadurch gekennzeichnet, dass** sie einen dem Hauptschmelzbereich (18) vorgeschalteten Vorschmelzbereich (26) aufweist, in dem der Schmelzklebstoff (14, 14') aufgeschmolzen wird.

18. Vorrichtung (16, 16') nach einem der Ansprüche 15 bis 17, **dadurch gekennzeichnet, dass** ein Tragelement (50) zur Aufnahme eines mit der Schutzfolie (12) zu schützenden Gutes vorgesehen ist, wobei das Tragelement (50) vorzugsweise so beschichtet ist das die Schutzfolie (12) nicht darauf haftet.

19. Verwendung der Schutzfolie (12) gemäss einem der Ansprüche 1 bis 6 zum Verpacken von Gebrauchs- und Verbrauchsgütern für deren Lagerung und Transport.

20. Verwendung der Schutzfolie (12) gemäss einem der Ansprüche 1 bis 6 zum Schutz der äusseren Oberflächen von Automobilen und/oder Automobilteilen und insbesondere von solchen lackierten Oberflächen.

21. Verwendung der Schutzfolie (12) gemäss einem der Ansprüche 1 bis 6 als Träger für Druckfarben, insbesondere für Aufdrucke mit Informationsoder Werbeinhalt.
